# EUROPEAN PATENT APPLICATION

(11) **EP 2 468 543 A2**
(43) Date of publication of application: **27.06.2012**
(21) Application number: 11380103.9
(22) Date of filing: 23.12.2011
(51) Int. Cl.: B60G 13/14

(54) **System for generating compressed air and method for managing the generation of compressed air in an automobile**

(30) Priority: 27.12.2010 ES 201031946
(71) Applicant: Seat, S.A., 08760 Martorell - Barcelona (ES)
(72) Inventor: Fernandez Gonzalez, José Luis, 08760 Barcelona (ES); Vargas Gomez, Domingo, 08760 Martorell Barcelona (ES); Medina Amezcua, Francisco Miguel, 08760 Barcelona (ES)
(74) Representative: Carvajal y Urquijo, Isabel

(57) **Abstract**

The present invention relates to a system for generating compressed air in an automobile having an energy converter (4), a secondary compressor (2) and a tank (1). The energy converter (4) has an inlet shaft (21) connected to an element of a suspension system (20) and an outlet shaft (22). The energy converter (4) converts an oscillating movement of the element of the suspension system (20) into a rotational movement in one single direction in the outlet shaft (22). The secondary compressor (2) driven by the outlet shaft (22) compresses air from an atmospheric air inlet (18) and obtains compressed air in a compressed air outlet (19). The tank (1) stores compressed air from the compressed air outlet (19) of the secondary compressor (2).

## Description

### Field of the Invention

The present invention is encompassed within the automotive field and more specifically, in the field of the systems for generating compressed air and methods for managing the generation of compressed air.

### Background of the invention

US 2004/0144581 shows a system for supercharging the internal combustion engine of a vehicle from the kinetic energy of the suspension system of the vehicle with an embodiment clearly differing from the present invention. US 2004/0144581 has a cylindrical hydraulic pump housing with points of attachment to the chassis and other points to the sub-chassis supporting the wheels. The hydraulic pump moves a hydraulic fluid which moves a hydraulic turbine which in turn, and by means of a rotation speed multiplying gear moves an air compressor which air is drawn through a filter is driven to a pressure greater than the atmospheric pressure for supercharging an engine through a conduit.

ES 2199090 shows a system using the vibration energy which the damping elements of a vehicle absorb for supercharging the internal combustion engine of the vehicle. US 2004/0144581 is designed to be the only supercharging system of the vehicle and ES 2199090 is to complement a standard turbocharger in low revolution rates. ES 2199090 has several modified dampers for directly compressing air which is sent through a conduit system to a central tank which in turn charges the intake manifold. The circulation of air in the opposite direction is prevented by means of check valves, both from the tank towards the dampers and from the intake manifold. It is therefore a purely pneumatic system unlike US 2004/0144581 which is hydraulic-pneumatic system. In ES 2199090 the compressed air in the dampers is directly used for supercharging the engine.

### Description of the Invention

The invention relates to a system for generating compressed air and a method for managing the generation of compressed air in an automobile such as those defined in the claims. The invention allows generating compressed air from the vibrations of the damping system without the need of introducing complex intermediate hydraulic systems as required by US 2004/0144581. The present invention also allows generating compressed air from the vibrations of the damping system without the need for modifying the dampers of the damping system as required by ES 2199090.

To that end, the invention defines a system for generating compressed air in an automobile comprising:
1a) an energy converter:
   1a1) having an inlet shaft connected to an element of a suspension system;
   1a2) having an outlet shaft;
   1a3) configured for converting an oscillating movement of the element of the suspension system into a rotational movement in one single direction in the outlet shaft;
1b) a secondary compressor:
   1b1) driven by the outlet shaft;
   1b3) configured for compressing air from a first atmospheric air inlet and obtaining compressed air in a compressed air outlet;
1c) storage means configured for storing compressed air from the compressed air outlet of the secondary compressor.

The vehicles travel on a road surface which is not perfectly flat, causing vibrations which oscillate the wheels thereof with respect to the chassis. Most of the energy caused by these vibrations is absorbed by the spring and the damper of the suspension without being harnessed. The invention allows harnessing said energy. The rest of the energy from these vibrations is absorbed by the damping of the tyre and of the silentblock.

The essentially vertical oscillating movement of the wheels is converted into a rotation in alternative directions in the attachment shaft between the frame of the vehide and the sub-chassis supporting the wheels. This rotation is transmitted to an air compressor by means of a toothed wheel integral with the sub-chassis and another integral with the chassis. The compressed air goes into the storage means and is subsequently used as the air for charging the engine.

This system has an effect similar to a supercharging by means of a turbocharger or a mechanically driven compressor, solving the problem of this type of supercharging in low speed of the engine. It therefore optimises the performance of the internal combustion engines.

Depending on the pressure in the storage means, the system can operate in different modes:
Operating at normal rate: the vibrations rotate the compressor sending high pressure air to the storage means. Subsequently the pressurised air is used as the air for charging the engine, increasing its performance.

Operating with a lot of vibration energy: If the pressure in the storage means reaches a predetermined value, part of the air can be sent to charge the engine and another part can be used to move a turbine-compressor. This turbine can drive an electric engine-alternator which can serve for charging batteries (the main battery or an auxiliary battery) of the vehicle. The engine-alternator is coupled to the explosion engine by means of a magnetic clutch. When there is little pressure in the storage means the main engine moves the engine-alternator.

Operating with little vibration energy: If the pressure in the storage means is low, the engine-alternator can operate as an engine, taking electric power from the batteries and moving the turbine-compressor. In this case, the turbine-compressor can feed the storage means with pressurised air for injecting it to charge the engine.

### Brief Description of the Drawings

A set of drawings which aid to better understand the invention and which specifically relate to an embodiment of said invention presented as a non limiting example thereof is very briefly described below.

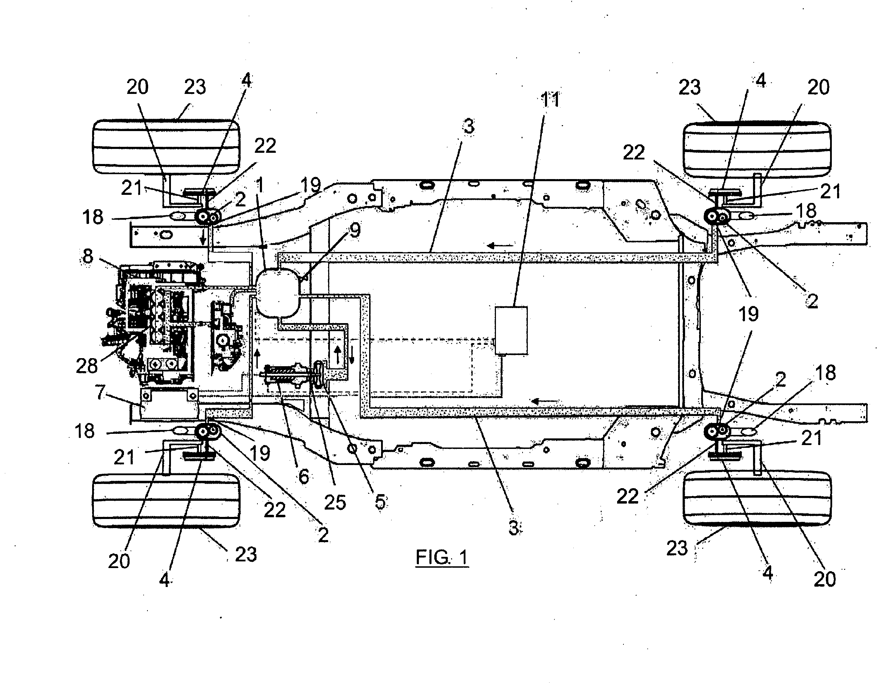

Figure 1 shows a diagram of the system of the invention. The conduits filled with dots represent pressurised air conduits, the dashed lines represent data lines and the dotted lines represent electric lines.

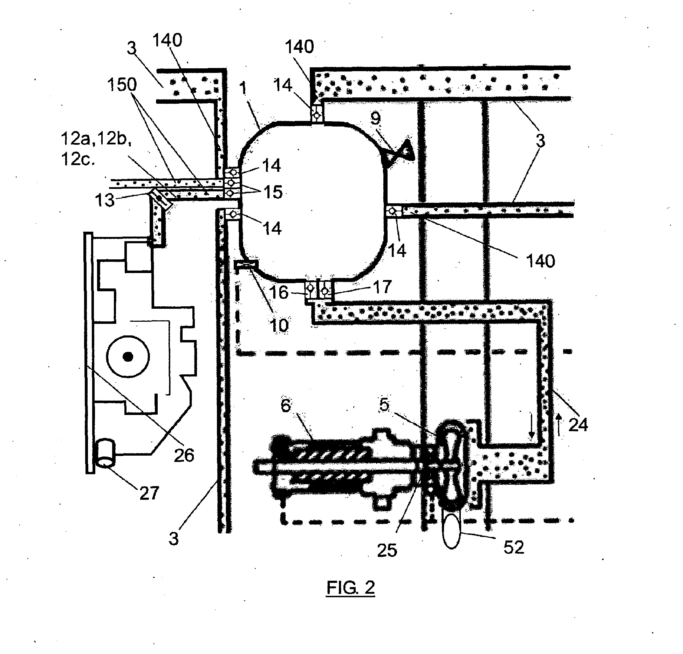

Figure 2 is a detail of Figure 1.

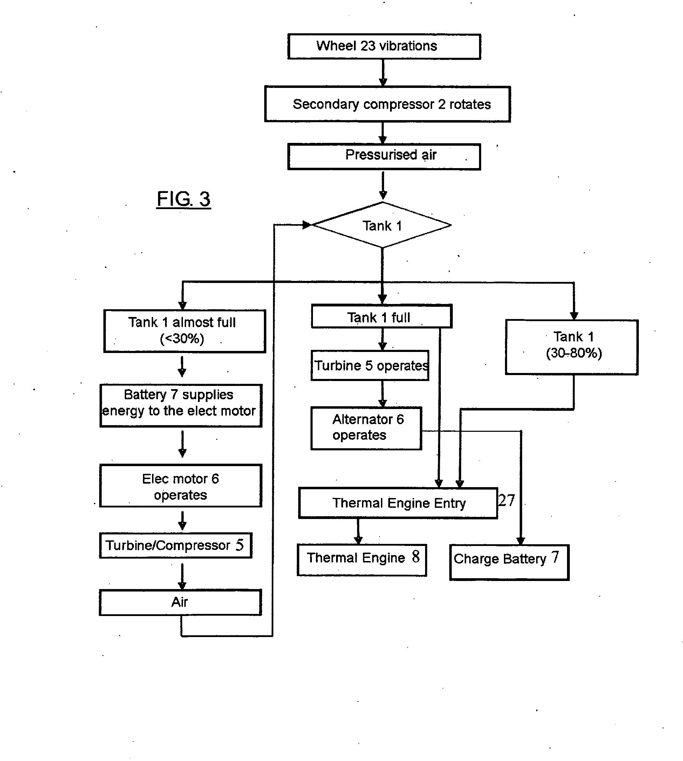

Figure 3 shows a flow diagram of the method of the invention.

A series of references corresponding to the elements indicated below is identified in the aforementioned drawings, without involving any limiting character:
1. Secondary compressor
2. Compressed air pipes from wheels
3. Main tank
4. Energy converter
5. Turbine-compressor
6. Engine-alternator
7. Battery
8. Thermal engine
9. Safety valve
10. Two microswitch electrovalve in the tank
11. Control unit
12. Thermal engine/internal combustion entry
13. Throttle
14. One-way valve for air entering the tank
15. One-way valve for air exiting the tank
16. Calibrated valve for air entering the tank
17. Calibrated valve for air exiting the tank
18. Atmospheric air inlet
19. Compressed air outlet
20. Suspension system
21. Inlet converter
22. Outlet shaft
23. Wheel
24. Reversible connection
25. Drive shaft
26. Intake manifold
27. Entry of a thermal engine
28. Cylinders
12a. Entry of a turbocharger
12b. Entry of a mechanically driven compressor
12c. Entry of an atmospheric engine
52. Second atmospheric air inlet
140. Compressed air inlet
150. Compressed air outlet

### Detailed Description of an Embodiment

One embodiment of the invention relates to a system for generating compressed air in an automobile comprising:
1a) an energy converter (4):
   1a1) having an inlet shaft (21) connected to an element of a suspension system (20);
   1a2) having an outlet shaft (22);
   1a3) configured for converting an oscillating movement of the element of the suspension system (20) into a rotational movement in one single direction in the outlet shaft (22);
1b) a secondary compressor (2):
   1b1) driven by the outlet shaft (22);
   1b3) configured for compressing air from a first atmospheric air inlet (18) and obtaining compressed air in a compressed air outlet (19);
1c) storage means (1) configured for storing compressed air from the compressed air outlet (19) of the secondary compressor (2).

According to other features of the invention:
2. The system comprises:
   2a) a plurality of pipes (3):
      2a1) connecting the compressed air outlet (19) of a secondary compressor (2) and a compressed air inlet (140) of the storage means (1);
      2a2) configured for transporting compressed air from the compressed air outlet (19) of a secondary compressor (2) to a compressed air inlet (140) of the storage means (1).
   3a)The storage means (1) comprise a stored compressed air outlet (150) which exits into an engine intake system of the automobile for providing stored compressed air to the intake system.
4.- The stored compressed air outlet (150) is connected to a point selected from:
   4a)an entry of a turbocharger (12a);
   4b) an entry of a mechanically driven compressor (12b);
   4c) an entry of an atmospheric engine (12c).
5.- The system comprises:
   5a) a turbine-compressor (5):
      5a1) connected to the storage means (1) through a reversible connection (24);
   5b) an engine-alternator (6):
      5b1) connected to a drive shaft (25) of the turbine-compressor (5);
      where:
   5a) the turbine-compressor (5) is configured for:
      5a2) compressing air from a second atmospheric air inlet (52) and obtaining compressed air in the reversible connection (24) being driven by the drive shaft (25), the turbine-compressor (5)operating in compressor mode;
      5a3) expanding stored compressed air from the reversible connection (24) obtaining a mechanical energy in the drive shaft (25), the turbine-compressor (5) operating in turbine mode;
   5b) the engine-alternator (6) is configured for:
      5b2) driving the drive shaft (25) so that air from a second atmospheric air inlet (52) is compressed in the turbine-compressor (5), the engine-alternator (6) operating in engine mode;
      5b3) generating electric power from the mechanical energy from the drive shaft (25), the engine-alternator (6) operating in alternator mode.
6.- The system comprises:
   6a) an electrovalve (10) for opening/closing the connections of the storage means (1);
   6b) a control unit (11) for controlling an operation of the electrovalve (10).
7.- The storage means (1) comprise:
   7a) a safety valve (9) configured for preventing an overpressure in the storage means (1).
8.- The system comprises an energy converter (4) and a secondary compressor (2) in each wheel (23).

The invention also relates to a method for managing the generation of compressed air in an automobile by means of a system as that described above which comprises:
9a) determining a maximum acceptable pressure, MAP, of the storage means (1);
9b) measuring a pressure, P, of the storage means (1);
9c) if 30% MAP< P < 80% MAP:
   9c1) opening a connection between a stored compressed air outlet (150) and an engine intake system of the automobile.

According to other features of the invention:
10.- The method comprises:
   10a) if P < 30% MAP:
      10a1) selecting engine mode for an engine-alternator (6) operation;
      10a2) selecting compressor mode for a turbine-compressor (5) operation;
      10a3) charging the engine-alternator (6) with electric power in engine mode, obtaining a mechanical energy in the drive shaft (25);
      10a4) compressing air from a second atmospheric air inlet (52) in the turbine-compressor (5) in compressor mode, obtaining compressed air in the reversible connection (24);
   10b) if 30% MAP< P < 80% MAP:
      10b1) opening a connection between a stored compressed air outlet (150) and an engine intake system of the automobile;
   10c) if 80% MAP < P:
      10c1) opening a connection between a stored compressed air outlet (150) and an engine intake system of the automobile;
      10c2) selecting alternator mode for an engine-alternator (6) operation;
      10c3) selecting turbine mode for a turbine-compressor (5) operation;
      10c4) expanding stored compressed air from the reversible connection (24) in the turbine-compressor (5) in turbine mode, obtaining a mechanical energy in the drive shaft (25);
      10c5) generating electric power from the mechanical energy from the drive shaft (25) in the engine-alternator (6) in alternator mode.

In an embodiment of the invention the air is drawn in by four secondary compressors (2), one per wheel (23), from the outside air, the compressors being driven by four energy converters (4) which convert the two-way rotation movement into a one way rotation.

Thus, four pipes (3) enter the storage means or tank (1), one pipe per wheel (23). Evidently the amount of flow entering through each pipe can be different, according to the vibrations of the corresponding wheel (23).

The electrovalve (10) is involved in the management of the compressed air in the tank (1). The electrovalve (10) can be controlled by a control unit (11), although other simpler control systems would also be applicable. The electrovalve (10) also collects data of the pressure in the tank (1) instantaneously and comprises two microswitches: a first high pressure microswitch and a second low pressure microswitch. The high pressure microswitch is activated at 6 bar and the low pressure microswitch is activated at 3 bar. Thus there can be 3 operating modes.

### 1.- The pressure measured by the electrovalve (10) inside the tank (1) measures less than 3 bar

In this mode the converters (4) are not supplying sufficient energy or air. The electric battery (7) activates the engine/alternator (6) in engine mode and the engine/alternator (6) drives the turbine/compressor (5) in compressor mode.

This compressor (5) then draws in air and compresses it and injects it into the tank (1) through the inlet only one-way valve (16), and injects the sufficient amount and pressure even in the high speed of the engine (28).

Next, the outlet only one-way valve (15) is opened and then the throttle (13) administers it to the cylinders (28) according to the engine CPU or ECU itself.

The air generated in the secondary compressors (2) from the vibrations of the wheels is also injected into the tank. In other words, the supercharge air from the wheels (23) is used for supercharging although it needs the additional contribution from the turbine/compressor (5) operating in compressor mode.

### 2.- The pressure measured by the electrovalve (10) in the tank (1) between 3 and 6 bar

The air generated by the secondary compressors (2) is injected into the tank (1), it enters through the inlet only one-way valves (14), and then goes directly through the outlet (15) to the intake manifold (26).

In other words, the supercharged air for the engine comes only from the converters (4) of.the wheels (23).

### 3.- The pressure measured by the electrovalve (10) is greater than 6 bar

In this case the air generated by the four converters (4) is injected into the tank (1) and then part of the air is distributed towards the turbine/compressor (5) operating in turbine mode. This distributed air drives the turbine/compressor (5) in turbine mode generating rotational force and moving the engine/alternator (6) operating in alternator mode, generating electric power. The electric power can be used for charging the battery (7).

Part of the air from the four converters (4) injected into the tank (1) which has not been distributed towards the turbine exits through the outlet (15) towards the intake manifold (26) as supercharge air.

In this operating mode the compressed air generated in the wheels is used for generating electric power and supercharged air to the internal combustion engine or thermal engine (8).

## Claims

1. A system for generating compressed air in an automobile **characterised in that** it comprises:
1a)an energy converter (4):
1a1) having an inlet shaft (21) connected to an element of a suspension system (20);
1a2) having an outlet shaft (22);
1a3) configured for converting an oscillating movement of the element of the suspension system (20) into a rotational movement in one single direction in
the outlet shaft (22);
1b)a secondary compressor (2):
1b1) driven by the outlet shaft (22);
1b3) configured for compressing air from a first atmospheric air inlet (18) and obtaining compressed air in a compressed air outlet (19);
1c) storage means (1) configured for storing compressed air from the compressed air outlet (19) of the secondary compressor (2).

2. The system of claim 1, **characterised in that** it comprises:
2a)a plurality of pipes (3):
2a1) connecting the compressed air outlet (19) of a secondary compressor (2)and a compressed air inlet (140) of the storage means (1);
2a2) configured for transporting compressed air from the compressed air outlet (19) of a secondary compressor (2) to a compressed air inlet (140) of the storage means (1).

3. The system of any of claims 1-2, **characterised in that**:
3a)the storage means (1) comprise a stored compressed air outlet (150) which exits into an engine intake system of the automobile for providing stored compressed air to the intake system.

4. The system of claim 3, **characterised in that** the stored compressed air outlet (150) is connected to a point selected from:
4a)an entry of a turbocharger (12a);
4b) an entry of a mechanically driven compressor (12b);
4c) an entry of an atmospheric engine (12c).

5. The system of any of claims 1-4, **characterised in that** it comprises:
5a) a turbine-compressor (5):
5a1) connected to the storage means (1) through a reversible connection (24);
5b) an engine-alternator (6):
5b1) connected to a drive shaft (25) of the turbine-compressor (5);
wherein:
5a)the turbine-compressor (5) is configured for:
5a2) compressing air from a second atmospheric air inlet (52) and obtaining compressed air in the reversible connection (24) being driven by the drive shaft (25);
5a3) expanding stored compressed air from the reversible connection (24) obtaining a mechanical energy in the drive shaft (25);
5b)the engine-alternator (6) is configured for:
5b2) driving the drive shaft (25) so that the air from a second atmospheric air inlet (52) is compressed in the turbine-compressor (5);
5b3) generating electric power from the mechanical energy from the drive shaft (25).

6. The system of any of claims 1-5, **characterised in that** it comprises:
6a)an electrovalve (10) for opening/closing the connections of the storage means (1);
6b) a control unit (11) for controlling an operation of the electrovalve (10).

7. The system of any of claims 1-6, **characterised in that** the storage means (1) comprise:
7a)a safety valve (9) configured for preventing an overpressure in the storage means (1).

8. The system of any of claims 1-7, **characterised in that** it comprises an energy converter (4) and a secondary compressor (2) in each wheel (23).

9. A method for managing the generation of compressed air in an automobile by means of a system of any of claims 3-8, **characterised in that** it comprises:
9a) determining a maximum acceptable pressure, MAP, of the storage
means (1);
9b) measuring a pressure, P, of the storage means (1);
9c) if 30% MAP< P < 80% MAP:
9c1) opening a connection between a stored compressed air outlet (150) and an engine intake system of the automobile.

10. The method of claim 9, **characterised in that** it comprises:
10a) if P < 30% MAP:
10a1) selecting engine mode for an engine-alternator (6) operation;
10a2) selecting compressor mode for a turbine-compressor (5) operation;
10a3) charging the engine-alternator (6) with electric power in engine mode, obtaining a mechanical energy in the drive shaft (25);
10a4) compressing air from a second atmospheric air inlet (52) in the turbine-compressor (5) in compressor mode, obtaining compressed air in
the reversible connection (24);
10b) if 30% MAP< P < 80% MAP:
10b1) opening a connection between a stored compressed air outlet (150) and an engine intake system of the automobile;
10c) if 80% MAP < P:
10c1) opening a connection between a stored compressed air outlet (150) and an engine intake system of the automobile;
10c2) selecting alternator mode for an engine-alternator (6) operation;
10c3) selecting turbine mode for a turbine-compressor (5) operation;
10c4) expanding stored compressed air from the reversible connection (24) in the turbine-compressor (5) in turbine mode, obtaining a mechanical energy in the drive shaft (25);
10c5) generating electric power from the mechanical energy from the drive shaft (25) in the engine-alternator (6) in alternator mode.
